# EUROPEAN PATENT SPECIFICATION

(11) **EP 2 974 645 B1**
(45) Date of publication and mention of the grant of the patent: **03.05.2017**
(21) Application number: 15170039.0
(22) Date of filing: 01.06.2015
(51) Int. Cl.: A47L 15/42

(54) **DISHWASHER**
GESCHIRRSPÜLER
LAVE-VAISSELLE

(30) Priority: 17.07.2014 KR 20140090338
(43) Date of publication of application: 20.01.2016
(73) Proprietor: LG Electronics Inc., Yeongdeungpo-gu Seoul 150-721 (KR)
(72) Inventor: SHIN, Gapsu, Seoul 153-802 (KR); YOON, Sangheon, Seoul 153-802 (KR)
(74) Representative: Hibbert, Juliet Jane Grace

(56) References cited:
- EP-A1- 0 381 586
- DE-U1- 9 211 880
- DE-U1- 9 215 365
- US-A- 2 880 740

## Description

### BACKGROUND

### Field

The present disclosure relates to a dishwasher.

### Discussion of Related Art

A dishwasher is an appliance that washes food leftovers remaining on the dishes or cooking utensils (hereinafter, referred to as 'washing target') by using a detergent or washing water.

It is general that a general dishwasher includes a tub for providing a washing space, a rack provided inside the tub, in which a washing target is received, a spray arm for spraying the washing water to the rack, a sump for storing the washing water therein, and a pump for supplying the washing water stored in the sump to the spray arm.

Meanwhile, in a dishwasher according to the related art, vibration generated in the pump may be transferred to a cabinet or the tub. In this case, a problem may occur in that noise is caused when the vibration generated in the pump is transferred to the cabinet or the tub.

EP 0 381 586A concerns a method for acoustically insulating noise sources in a dishwasher by acoustically insulating a motor-pump group inside the dishwasher tank from the exterior by the tank.

### SUMMARY

Accordingly, the present disclosure is directed to a dishwasher that substantially obviates one or more problems due to limitations and disadvantages of the related art.

The present disclosure provides a dishwasher that prevents vibration generated in a pump for supplying the washing water to spray arms from being transferred to the outside.

Additional advantages, objects, and features will be set forth in part in the description which follows and in part will become apparent to those having ordinary skill in the art upon examination of the following or may be learned from practice. Other advantages may be realized and attained by the structure particularly pointed out in the written description and claims hereof as well as the appended drawings.

To achieve advantages in accordance with the present disclosure, there is provided a dishwasher which comprises a cabinet; a tub for providing a washing space; a sump for providing a space in which the washing water is stored, located below the tub; racks provided inside the tub, providing a space in which washing targets are received; spray arms for spraying the washing water to the racks; a pump for supplying the washing water stored in the sump to the spray arms; and at least two insulating units for connecting the pump with the sump to allow the pump to be spaced apart from a bottom of the cabinet at a predetermined distance and attenuating transfer of vibration generated in the pump to the sump.

The insulating units include first and second insulating units provided along a height direction of the cabinet, supporting a side of the pump towards the sump.

The sump may include a storage unit for storing the washing water therein; a cover located above the storage unit, partitioning the tub from the storage unit; a hole provided to pass through the cover, supplying the washing water to the storage unit; and a connecting unit connecting the storage unit to the cover, through which the first insulating unit and the second insulating unit are supported.

The first insulating unit and the second insulating unit may be provided to provide tension for pulling the pump in a direction of the connecting unit.

The sump may further include a receiving unit provided in the connecting unit, providing a space in which an upper surface of the pump may be received, and the insulating units support the pump to space the upper surface of the pump apart from the surface of the receiving unit at a predetermined distance.

The sump may further include first and second supporting units provided in the connecting unit, detachably supporting the first and second insulating units, and the pump further may further include first and second fastening units protruded from an outer circumference.

The first insulating unit may include a first body, a first supporting unit fastening hole provided in the first body, through which the first supporting unit is detachably inserted, and a first body slit provided in the first body, through which the first fastening unit is detachably inserted, and the second insulating unit may include a second body, a second supporting unit fastening hole provided in the second body, through which the second supporting unit is detachably inserted, and a second body slit provided in the second body, through which the second fastening unit is detachably inserted.

The first body slit is provided to have a longitudinal width of the first body in parallel with a height direction of the cabinet, to be longer than a width of a horizontal direction of the first body, and the second body slit is provided to have a longitudinal width of the second body in parallel with a height direction of the cabinet, to be longer than a width of a horizontal direction of the second body.

The insulating units may further include a third insulating unit provided between the receiving unit and the upper surface of the pump to space the receiving unit apart from the upper surface of the pump at a predetermined distance and attenuating transfer of vibration generated in the pump to the sump.

Each of the first insulating unit, the second insulating unit, and the third insulating unit are made of an elastic material.

The insulating units may further include at least one of a fourth insulating unit guiding the washing water stored in the storage unit to the pump and attenuating transfer of vibration generated in the pump to the sump, and a fifth insulating unit guiding the washing water discharged from the pump to the spray arms and attenuating transfer of vibration generated in the pump to the spray arms.

The sump may further include a third supporting unit provided in the receiving unit, supporting the third insulating unit, and the third insulating unit includes a third body that is in contact with the upper surface of the pump, and a protrusion that is protruded from the third body, is in contact with the third supporting unit and has a sectional area smaller than that of the third body.

The third supporting unit may be provided with a groove guiding movement of the protrusion when the pump is moved by tension of the insulating units.

The third insulating unit may further include a groove provided such that a surface of the third body is bent concavely, or a plurality of holes provided to pass through the third body.

The storage unit is protruded towards a lower portion of the cover and has a sectional area smaller than an area of the cover, and the insulating units support the pump to allow the pump to be located at a lower space of the cover, in which the storage unit is not provided.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding and are incorporated in and constitute a part of this application, illustrate embodiment(s) and together with the description serve to explain the principle. In the drawings:
FIG. 1 is a view illustrating a dishwasher according to embodiments;
FIG. 2 is an exploded view illustrating a sump, a pump and an insulator; and
FIG. 3 is a view illustrating a coupling structure of a sump and a pump.

### DETAILED DESCRIPTION

Reference will now be made in detail to the preferred embodiments, examples of which are illustrated in the accompanying drawings. Meanwhile, it is to be understood that a configuration of an apparatus, which will be described hereinafter, or method for controlling the same are not intended to restrict the scope of the claims but intended to describe embodiments. Wherever possible, the same reference numbers will be used throughout the drawings to refer to the same or like parts.

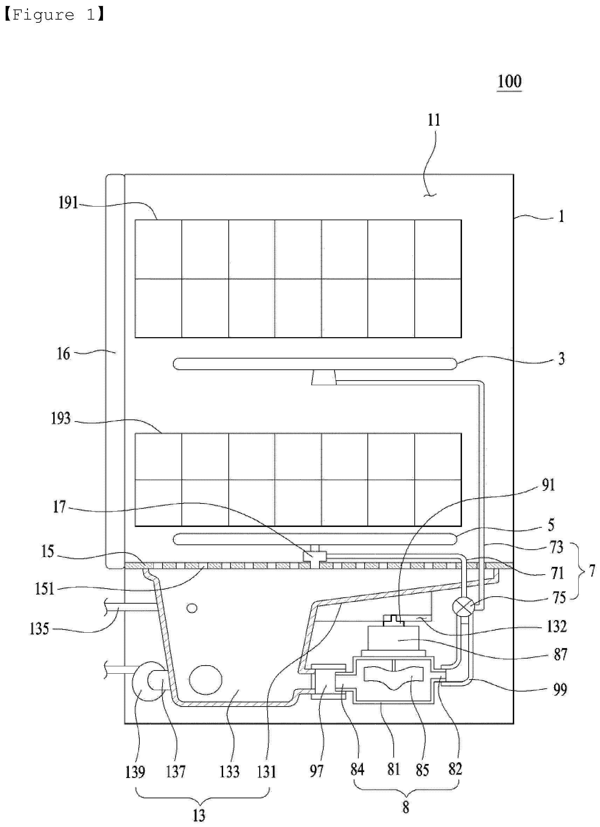

As shown in FIG. 1, a dishwasher 100 according to embodiments includes a cabinet 1 constituting appearance, a tub 11 located inside the cabinet 1, providing a washing space, racks 191 and 193 provided inside the tub 11, providing a space in which washing targets are received, spray arms 3 and 5 for spraying the washing water towards the racks, a sump 13 for returning the washing water sprayed into the tub, and a pump 8 for supplying the washing water stored in the sump 13 to the spray arms 3 and 5.

The racks 191 and 193 may be categorized into the first rack 191 (upper rack) and the second rack 193 (lower rack) located below the first rack.

The cabinet 1 is provided with a door 16 for opening and closing the tub 11, and the upper rack 191 and the lower rack 193 may be provided to be taken out of the cabinet when the door 16 opens the tub 11.

That is, a rail (not shown) for guiding movement of the racks 191 and 193 to the door 16 may be provided in an inner circumference of the tub 11, and the racks may further be provided with a roller (not shown) supported on the rail.

The sump 13 may be provided to include a storage unit 133 in which the washing water is stored, a cover 15 located above the storage unit 133 to partition the tub 11 from the storage unit 133, and a connecting unit 131 connecting the storage unit 133 to the cover 15.

In this case, the cover 15 may further be provided with a plurality of holes 151 provided to pass through the cover 15, supplying the washing water to the storage unit 133.

The holes 151 may be provided only in an area provided by the cover 15 and located above the storage unit 133, or may be provided in the full area of the cover 15 to supply the washing water inside the tub 11 to the connecting unit 131.

The connecting unit 131 may be provided to be tilted at a predetermined angle towards the storage unit 133 to guide the washing water entered through the holes 151 to the storage unit 133.

Preferably, the tub 11 is located at a space located above the cover 15. This is to allow the washing water sprayed into the tub 11 through the spray arms 3 and 5 to return to the storage unit 133 through the holes 151 and the connecting unit 131 without any separate unit.

The cover 15 may be provided in a shape to identify an inner space of the cabinet 1, and the connecting unit 131 may be provided to be fixed to the lower portion of the cover 15.

The connecting unit 131 may be provided to fully surround the lower space of the cover 15 (a plane area of the cover is the same as that of a body), or may be provided to surround only a space in which the holes 151 are formed.

In the meantime, the storage unit 133 may be provided in such a manner that the cover 15 may be bent concavely towards a bottom of the cabinet 1. However, it is preferable that the storage unit 133 has a sectional area smaller than an area of the connecting unit 131 and the connecting unit 131 is downwardly tilted towards the storage unit 133.

If the storage unit 133 is provided to have a sectional area smaller than the area of the connecting unit 131, the pump 8 may be located at a lower area of the connecting unit 131, wherein the storage unit 133 is not provided at the lower area of the connecting unit 131, whereby a volume of the dishwasher 100 may be minimized.

The storage unit 133 is supplied with the washing water through a water supply path 135 connected to a water supply source (not shown), and the washing water stored in the storage unit 133 is discharged out of the cabinet 1 through a drainage path 137 and a drainage pump 139.

The spray arms provided in the present invention may include the lower arm 5 for washing the washing target provided inside the tub 11 and received in the lower rack 193, and the upper arm 3 for washing the washing target received in the upper rack 191.

The lower arm 5 and the upper arm 3 are supplied with the washing water through the pump 8 and a supply path 7, wherein the supply path 7 may be provided with a first supply path 71 connected to the lower arm 5, a second supply path 73 connected to the upper arm 3, and a switching valve 75 selectively opening the respective supply paths 71 and 73.

If the lower arm 5 is provided rotatably inside the tub 11, the lower arm 5 may rotatably be coupled to a holder 17 provided in the cover 15, and the first supply path 71 may be provided to supply the washing water to the holder 17.

In the meantime, if the upper arm 3 is provided rotatably inside the tub 11, the upper arm 3 may rotatably be coupled to the second supply path 73.

The pump 8 may include a housing 81 provided with an impeller 85, an inlet 84 through which the washing water flows into the housing 81, an outlet 82 through which the washing water inside the housing 181 is discharged out, and a motor 87 provided outside the housing 181, for rotating the impeller 85.

The inlet 84 is connected to the storage unit 133 through an inlet connecting pipe 97, and the outlet 82 is connected to the switching valve 75 through an outlet connecting pipe 99.

Therefore, if the impeller 85 is rotated as the motor 87 is supplied with a power, the water supplied from the sump 13 to the housing 81 moves to the switching valve 75 through the outlet 82, and the water supplied to the switching valve 75 is supplied to the upper arm 3 or the lower arm 5 along the supply paths 71 and 73 opened by the switching valve 75.

The pump 8 is fixed into the cabinet 1 through insulating units including insulating unit 91, wherein the insulating units are means for attenuating vibration generated in the pump 8 to prevent the vibration from being transferred to the sump 13 and the cabinet 1.

According to embodiments that two or more insulating units are provided as means for spacing the outer circumference of the pump 8 apart from the bottom of the cabinet 1 at a predetermined distance and spacing the outer circumference of the pump 8 apart from the sump 13 at a predetermined distance.

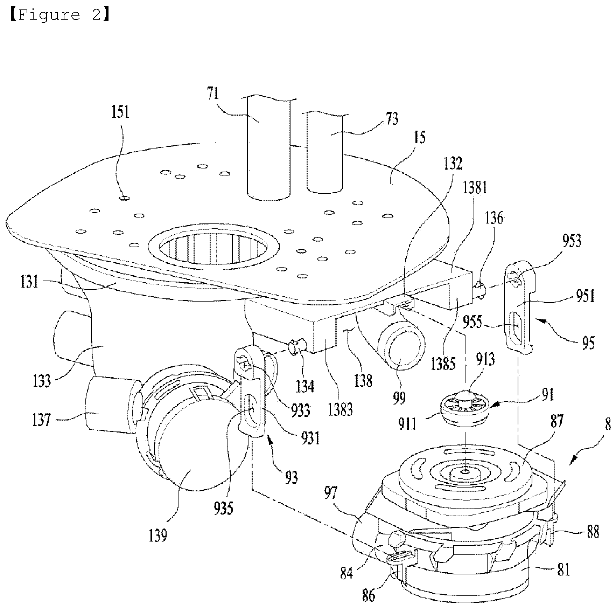

As shown in FIG. 2, there is provided first and second insulating units 93 and 95 for spacing a bottom of the pump 8 apart from the bottom of the cabinet 1 at a predetermined distance and an optional third insulating unit 91 for spacing an upper surface of the pump 8 apart from the sump 13 at a predetermined distance.

Since the motor 87 for rotating the impeller 85 provided inside the housing 81 is provided on the upper surface of the pump 8, the third insulating unit 91 serves to maintain the spacing between the motor 87 and the sump 13.

Also, the first insulating unit 93 and the second insulating unit 95 serve to maintain the spacing between the bottom of the housing 81 forming the lower surface of the pump 8 and the bottom of the cabinet.

The third insulating unit 91 is provided with a third body 911 that is in contact with the upper surface of the motor 87, and a protrusion 913 protruded from the third body 911, being in contact with any one of the connecting unit 131 of the sump and the cover 15.

FIG. 2 illustrates that the third insulating unit 91 is in contact with the connecting unit 131. In this case, it is optional that the connecting unit 131 is further provided with a receiving unit 138 for providing a space in which the upper surface of the pump may be received.

The receiving unit 138 may include a receiving body 1381 provided to be protruded from the connecting unit 131 and arranged in parallel with the bottom of the cabinet 1, and first and second flanges 1383 and 1385 protruded from the receiving body 1381 towards the bottom of the cabinet 1 and spaced apart from each other at a predetermined distance.

Moreover, the receiving unit 138 may further include a third supporting unit 132 through which the protrusion 913 is supported, to support the third insulating unit 91. The third supporting unit 132 is provided in such a manner that the surface of the receiving body 1381 is bent concavely towards the cover 15, or provided to be protruded from the surface of the receiving body 1381 towards the bottom of the cabinet to provide a space in which the protrusion 131 may be received.

In any case, it is optional that the third supporting unit 132 is provided at the corner of the receiving unit 138 towards the storage unit 133 to guide movement of the protrusion 913 when the pump 8 is assembled (the third supporting unit may be provided to guide movement of the pump when the pump is moved by tension of the first and second insulating units).

The third insulating unit 91 may be made of any material that may attenuate vibration of the motor 87, and for example, its material may include an elastic member such as rubber.

In the meantime, it is optional that the protrusion 913 has a sectional area smaller than that of the third body 911 to minimize transfer of vibration of the motor 87 to the sump 13.

Moreover, if the third body 911 is provided to include a hole provided to pass through the third body 911 or a groove (arranged along the circumference of the protrusion 913) provided such that the surface of the third body 911 is bent concavely, the vibration attenuation effect of the third body 911 may be more increased.

The first insulating unit 93 may be provided with a first body 931 having one end connected to the connecting unit 131 and the other end connected to the housing 81. The first body 931 may also be made of any material that may attenuate vibration generated in the pump 8, and for example, its material may include an elastic member such as rubber.

In the meantime, a first supporting unit 134 and a first fastening unit 86, which are coupled to the first body 931, should be provided in the connecting unit 131 and the housing 81, respectively. FIG. 2 illustrates an example that the first body 931 is detachably coupled to the receiving unit 138 located at the connecting unit 131. In this case, the first supporting unit 134 should be provided in the first flange 1383 which forms the receiving unit 138.

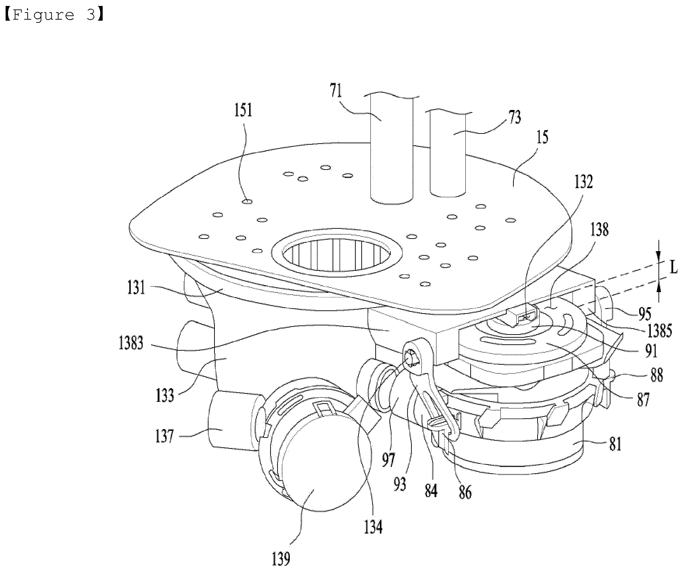

The first body 931 may be coupled to the first supporting unit 134 or the first fastening unit 86 in various structures. In examples of FIGs. 2 and 3, the first supporting unit 134 is provided to be protruded from the outer circumference of the receiving unit 138, and the first fastening unit 86 is provided to be protruded from the housing 81.

In this case, the first body 931 may be provided with a first supporting unit fastening hole 933 to which the first supporting unit 134 is inserted, and a first body slit 935 to which the first fastening unit 86 is inserted.

Optionally, the first body slit 935 is provided to pass through the first body 931, and has a longitudinal (height direction of the cabinet) dimension (e.g. length) greater than a horizontal width (width direction of the cabinet) of the first body 931. This is to facilitate assembly of the first body 931 and the first fastening unit 86.

The second insulating unit 95 may be provided in the same structure as that of the first insulating unit 93. That is, the second insulating unit 95 may be provided with a second body 951 made of a material that may attenuate vibration, a second supporting unit fastening hole 953 provided in the second body 951, and a second body slit 955.

In this case, a second supporting unit 136 to which the second supporting unit fastening hole 953 is inserted should be provided on the outer circumference (the second flange 1385) of the receiving unit 138, and a second fastening unit 88 protruded from the housing 81 and inserted to the second body slit 955 should be provided in the pump 8.

Optionally, the second body slit 955 is provided to pass through the second body 951, and has a longitudinal (height direction of the cabinet) dimension (e.g. length) greater than the horizontal width (width direction of the cabinet) of the second body 951.

Although the first insulating unit 93, the second insulating unit 95 and the third insulating unit 91 are described to fix the pump 8 to the receiving unit 138, the insulating units may be provided to fix the pump 8 to the cover 15.

In the meantime, in the dishwasher 100 having the aforementioned structure, vibration of the pump 8 may be transferred to the sump 13 or the cabinet 1 through an inlet connecting pipe 97 connecting the pump 8 with the storage unit 133 and an outlet connecting pipe 99 connecting the pump 8 with the switching valve 75.

Therefore, it is optional that each of the inlet connecting pipe 97 and the outlet connecting pipe 99 may be made of a material (elastic member) that may absorb vibration. In this case, the inlet connecting pipe 97 and the outlet connecting pipe 99 may serve as a fourth insulating unit and a fifth insulating unit, respectively.

The dishwasher having the aforementioned structure fixes the pump 8 to the sump 13 as follows.

As shown in FIG. 2, a worker fixes the first insulating unit 93 to the receiving unit 138 by inserting the first supporting unit fastening hole 933 to the first supporting unit 134, and fixes the second insulating unit 95 to the receiving unit 138 by inserting the second supporting unit fastening hole 953 to the second supporting unit 136.

Since each of the first insulating unit 93 and the second insulating unit 95 is made of a material for vibration attenuation, such as rubber, the worker pulls the first body 931 and the second body 951 to connect the first body slit 935 and the second body slit 955 to the first fastening unit 86 and the second fastening unit 88 of the housing, respectively.

Afterwards, the worker couples the third insulating unit 91 mounted on the upper surface of the motor 87 to the third supporting unit 132. In this case, the third supporting unit 132 will guide movement of the protrusion 913 of the third insulating unit 91. Therefore, if the worker locates the protrusion 913 in the third supporting unit 132, the pump 8 will be moved to a preset location and fixed to the sump 13 as shown in FIG. 3 in accordance with elasticity (tension of the first and second insulating units for pulling the pump in a direction of the sump) of the first insulating unit and the second insulating unit and guide of the third supporting unit 132.

In the meantime, as shown in FIG. 3, tension for spacing the upper surface of the pump apart from the surface of the receiving unit 138 at a predetermined distance L is sufficient for the tension provided to the pump 8 by the first insulating unit 93 and the second insulating unit 95.

According to the dishwasher 100 having the aforementioned structure, as vibration of the pump 8 may be prevented from being transferred to the sump 13 or the cabinet 1, noise and vibration of the dishwasher may be reduced. Also, as the pump 8 is located at the lower space of the connecting unit 131, in which the storage unit 133 is not provided, volume of the dishwasher may be minimized.

As described above, the dishwasher prevents vibrations generated in the pump for supplying the washing water to the spray arms from being transferred to the outside.

## Claims

1. A dishwasher (100) comprising:
a cabinet (1);
a tub (11) for providing a washing space;
a sump (13) located below the tub (11) for storing washing water;
racks (191, 193) provided inside the tub (11) for receiving washing targets;
spray arms (3, 5) for spraying washing water to the racks (191, 193);
a pump (8) for supplying washing water stored in the sump (13) to the spray arms (3, 5); and
at least two insulating units (91, 93, 95) connecting the pump (8) to the sump (13) and spacing apart the pump (8) from a bottom of the cabinet (1) by a predetermined distance so as to attenuate the transfer of vibration generated in the pump (8) to the sump (13), the insulating units being made of an elastic material,
wherein the insulating units comprise:
first and second insulating units (93, 95) extending in a height direction of the cabinet (1), each supporting a side of the pump (8), and
a third insulating unit (91) provided between the sump (13) and an upper surface of the pump (8) to attenuate transfer of vibration generated in the pump (8) to the sump (13), the sump (13) comprises first and second supporting units (134, 136) arranged to detachably support the first and second insulating units (93, 95), wherein the sump (13) comprises a third supporting unit (132) having a groove for guiding movement of the third insulating unit (91), when the pump (8) is moved by tension in the insulating units.

2. The dishwasher according to claim 1, wherein the sump (13) includes:
a storage unit (133) for storing washing water therein;
a cover (15) located above the storage unit (133), partitioning the tub (11) from the storage unit (133);
a hole (151) provided to pass through the cover (15) for supplying washing water to the storage unit (133); and
a connecting unit (131) for connecting the storage unit (133) to the cover (15) and supporting the first insulating unit (93) and the second insulating unit (95).

3. The dishwasher according to claim 2, wherein the first insulating unit (93) and the second insulating unit (95) are arranged to provide tension for pulling the pump (8) in a direction of the connecting unit (131).

4. The dishwasher according to claim 2 or 3, wherein the connecting unit (131) further includes a receiving unit (138) arranged to provide a space for receiving an upper surface of the pump (8), and wherein the insulating units (91, 93, 95) support the pump (8) to space the upper surface of the pump (8) apart from the surface of the receiving unit (138) by a predetermined distance (L).

5. The dishwasher according to claim 2, 3 or 4, wherein the sump (13) further includes the first and second supporting units (134, 136) provided on the connecting unit (131) arranged to detachably support the first and second insulating units (93, 95), and the pump (8) further includes first and second fastening units (86, 88) protruded from an outer circumference thereof.

6. The dishwasher according to claim 5, wherein the first insulating unit (93) includes a first body (931) comprising a first supporting unit fastening hole (933), through which the first supporting unit (134) is detachably inserted, and a first body slit (935), through which the first fastening unit (86) is detachably inserted, and
the second insulating unit (95) includes a second body (951) comprising a second supporting unit fastening hole (953), through which the second supporting unit (136) is detachably inserted, and a second body slit (955), through which the second fastening unit (88) is detachably inserted.

7. The dishwasher according to claim 6, wherein the first body slit (935) has a longitudinal dimension in parallel with a height direction of the cabinet (1), which is greater than the width of the first body (931), and the second body slit (955) has a longitudinal dimension in parallel with a height direction of the cabinet (1), which is greater than the width of the second body (951).

8. The dishwasher according to claim 4, wherein the third insulating unit (91) is provided between the receiving unit (138) and the upper surface of the pump (8) to space the receiving unit (138) apart from the upper surface of the pump (8) by a predetermined distance and attenuate transfer of vibration generated in the pump (8) to the sump (13).

9. The dishwasher according to claim 8, wherein the insulating units further include at least one of a fourth insulating unit for guiding washing water stored in the storage unit (133) to the pump (8) and attenuating transfer of vibration generated in the pump (8) to the sump (13), and a fifth insulating unit for guiding washing water discharged from the pump to the spray arms (3, 5) and attenuating transfer of vibration generated in the pump (8) to the spray arms (3, 5).

10. The dishwasher according to claim 8 or 9, wherein the third supporting unit (132) is provided in the receiving unit (138) for supporting the third insulating unit (91), and the third insulating unit (91) includes a third body (911) in contact with the upper surface of the pump (8), and a protrusion (913) from the third body (911) in contact with the third supporting unit (91), wherein the protrusion (913) has a cross-sectional area smaller than that of the third body (911).

11. The dishwasher according to claim 10, wherein the third insulating unit (91) further includes a plurality of holes passing through the third body (911) or a groove provided such that a surface of the third body (911) is bent concavely.

12. The dishwasher according to any one of claims 2 to 11, wherein the storage unit (133) protrudes towards a lower portion of the cover (15) and has a sectional area smaller than the area of the cover (15), and the insulating units (91, 93, 95) are arranged to support the pump (8) at a lower space of the cover (15), in which the storage unit (133) is not provided.

## Patentansprüche

1. Geschirrspüler (100), der aufweist:
ein Gehäuse (1);
eine Wanne (11) zum Bereitstellen eines Spülraums ;
einen Sumpf (13), der sich unter der Wanne (11) befindet, zum Speichern von Spülwasser;
Körbe (191, 193), die in der Wanne (11) bereitgestellt werden, zum Aufnehmen der zu spülenden Gegenstände;
Sprüharme (3, 5) zum Sprühen von Spülwasser auf die Körbe (191, 193);
eine Pumpe (8) zum Zuführen von Spülwasser, das in dem Sumpf (13) gespeichert wird, an die Sprüharme (3, 5); und
wenigstens zwei Isoliereinheiten (91, 93, 95), die die Pumpe (8) mit dem Sumpf (13) verbinden und die Pumpe (8) um einen vorgegebenen Abstand vom Boden des Gehäuses (1) beabstanden, um die Übertragung von in der Pumpe (8) erzeugten Vibrationen an den Sumpf (13) abzuschwächen, wobei die Isoliereinheiten aus einem elastischen Material hergestellt sind,
wobei die Isoliereinheiten aufweisen:
erste und zweite Isoliereinheiten (93, 95), die sich in einer Höhenrichtung des Gehäuses (1) erstrecken, wobei jede eine Seite der Pumpe (8) stützt, und
eine dritte Isoliereinheit (91), die zwischen dem Sumpf (13) und einer oberen Oberfläche der Pumpe (8) vorgesehen ist, um die Übertragung von in der Pumpe (8) erzeugten Vibrationen an den Sumpf (13) abzuschwächen,
wobei der Sumpf (13) erste und zweite Stützeinheiten (134, 136) aufweist, die dazu ausgelegt sind, die ersten und zweiten Isoliereinheiten (93, 95) abnehmbar zu stützen,
wobei der Sumpf (13) eine dritte Stützeinheit (132) aufweist, die eine Nut zum Führen der Bewegung der dritten Isoliereinheit (91) hat, wenn die Pumpe (8) durch Zug in den Isoliereinheiten bewegt wird.

2. Geschirrspüler nach Anspruch 1, wobei der Sumpf (13) aufweist:
eine Speichereinheit (133) zum Speichern von Spülwasser;
eine Abdeckung (15), die sich über der Speichereinheit (133) befindet und die Wanne (11) von der Speichereinheit (133) trennt;
ein Loch (151), das dazu vorgesehen ist, durch die Abdeckung (15) hindurchzugehen, zum Zuführen von Spülwasser zu der Speichereinheit (133); und
eine Verbindungseinheit (131) zum Verbinden der Speichereinheit (133) mit der Abdeckung (15) und zum Stützen der ersten Isoliereinheit (93) und der zweiten Isoliereinheit (95).

3. Geschirrspüler nach Anspruch 2, wobei die erste Isoliereinheit (93) und die zweite Isoliereinheit (95) dazu ausgelegt sind, Zug zum Ziehen der Pumpe (8) in Richtung der Verbindungseinheit (131) bereitzustellen.

4. Geschirrspüler nach Anspruch 2 oder 3, wobei die Verbindungseinheit (131) des Weiteren eine Aufnahmeeinheit (138) aufweist, die dazu ausgelegt ist, einen Raum zur Aufnahme einer oberen Oberfläche der Pumpe (8) bereitzustellen, und wobei die Isoliereinheiten (91, 93, 95) die Pumpe (8) stützen, um die obere Oberfläche der Pumpe (8) von der Oberfläche der Aufnahmeeinheit (138) um einen vorgegebenen Abstand (L) zu beabstanden.

5. Geschirrspüler nach Anspruch 2, 3 oder 4, wobei der Sumpf (13) des Weiteren die ersten und zweiten Stützeinheiten (134, 136) aufweist, die an der Verbindungseinheit (131) vorgesehen und dazu ausgelegt sind, die ersten und zweiten Isoliereinheiten (93, 95) abnehmbar zu stützen, und wobei die Pumpe (8) des Weiteren erste und zweite Befestigungseinheiten (86, 88) aufweist, die von einem äußeren Umfang davon vorstehen.

6. Geschirrspüler nach Anspruch 5, wobei die erste Isoliereinheit (93) einen ersten Körper (931) aufweist, der ein erstes Stützeinheit-Befestigungsloch (933) aufweist, durch welches die erste Stützeinheit (134) abnehmbar eingeführt wird, und einen ersten Körperschlitz (935), durch welchen die erste Befestigungseinheit (86) abnehmbar eingeführt wird, und
wobei die zweite Isoliereinheit (95) einen zweiten Körper (951) aufweist, der ein zweites Stützeinheit-Befestigungsloch (953) aufweist, durch welches die zweite Stützeinheit (136) abnehmbar eingeführt wird, und einen zweiten Körperschlitz (955), durch welchen die zweite Befestigungseinheit (88) abnehmbar eingeführt wird.

7. Geschirrspüler nach Anspruch 6, wobei der erste Körperschlitz (935) eine Längsausdehnung parallel zu einer Höhenrichtung des Gehäuses (1) hat, die größer ist als die Breite des ersten Körpers (931), und wobei der zweite Körperschlitz (955) eine Längsausdehnung parallel zu einer Höhenrichtung des Gehäuses (1) hat, die größer ist als die Breite des zweiten Körpers (951).

8. Geschirrspüler nach Anspruch 4, wobei die dritte Isoliereinheit (91) zwischen der Aufnahmeeinheit (138) und der oberen Oberfläche der Pumpe (8) vorgesehen ist, um die Aufnahmeeinheit (138) von der oberen Oberfläche der Pumpe (8) um einen vorgegebenen Abstand zu beabstanden und die Übertragung von in der Pumpe (8) erzeugten Vibrationen an den Sumpf (13) abzuschwächen.

9. Geschirrspüler nach Anspruch 8, wobei die Isoliereinheiten des Weiteren wenigstens eines aufweisen von einer vierten Isoliereinheit zum Leiten von Spülwasser, das in der Speichereinheit (133) gespeichert wird, an die Pumpe (8) und zum Abschwächen der Übertragung von in der Pumpe (8) erzeugten Vibrationen an den Sumpf (13), und eine fünfte Isoliereinheit zum Leiten von Spülwasser, das aus der Pumpe (8) abgegeben wird, an die Sprüharme (3, 5) und zum Abschwächen der Übertragung von in der Pumpe (8) erzeugten Vibrationen an die Sprüharme (3, 5).

10. Geschirrspüler nach Anspruch 8 oder 9, wobei die dritte Stützeinheit (132) in der Aufnahmeeinheit (138) vorgesehen ist, um die dritte Isoliereinheit (91) zu stützen, und wobei die dritte Isoliereinheit (91) einen dritten Körper (911) aufweist, der mit der oberen Oberfläche der Pumpe (8) in Kontakt ist, und einen Vorsprung (913) von dem dritten Körper (911), der mit der dritten Stützeinheit (91) in Kontakt ist, wobei der Vorsprung (913) eine Querschnittsfläche hat, die kleiner als diejenige des dritten Körpers (911) ist.

11. Geschirrspüler nach Anspruch 10, wobei die dritte Isoliereinheit (91) des Weiteren eine Vielzahl von Löchern aufweist, die durch den dritten Körper (911) hindurchgehen, oder eine Nut, die derart vorgesehen ist, dass eine Oberfläche des dritten Körpers (911) konkav gebogen ist.

12. Geschirrspüler nach einem der Ansprüche 2 bis 11, wobei die Speichereinheit (133) in Richtung eines unteren Abschnitts der Abdeckung (15) vorsteht und eine Querschnittsfläche hat, die kleiner als die Fläche der Abdeckung (15) ist, und wobei die Isoliereinheiten (91, 93, 95) dazu ausgelegt sind, die Pumpe (8) an einem unteren Raum der Abdeckung (15) zu stützen, in dem die Speichereinheit (133) nicht vorgesehen ist.

## Revendications

1. Lave-vaisselle (100) comprenant :
une enceinte (1) ;
un bac (11) fournissant un espace de lavage ;
un cuve (13) située sous le bac (11) pour stocker l'eau de lavage ;
des râteliers (191, 193) installés à l'intérieur du bac (11) pour recevoir les cibles du lavage ;
des bras de pulvérisation (3, 5) pour pulvériser l'eau de lavage sur les râteliers (191, 193) ;
une pompe (8) pour fournir l'eau de lavage stockée dans la cuve (13) aux bras de pulvérisation (3, 5) ; et
au moins deux unités d'isolation (91, 93, 95) raccordant la pompe (8) à la cuve (13) et séparant la pompe (8) du fond de l'enceinte (1) d'une distance prédéterminée de façon à atténuer le transfert des vibrations générées dans la pompe (8) à la cuve (13), les unités d'isolation étant constituées d'un matériau élastique,
les unités d'isolation comprenant :
des première et deuxième unités d'isolation (93, 95) s'étendant dans le sens de la hauteur de l'enceinte (1), chacune soutenant un côté de la pompe (8), et
une troisième unité d'isolation (91) entre la cuve (13) et une surface supérieure de la pompe (8) pour atténuer le transfert des vibrations générées dans la pompe (8) à la cuve (13),
la cuve (13) comprend des première et deuxième unités de soutien (134, 136) conçues pour soutenir de façon détachable les première et deuxième unités d'isolation (93, 95),
la cuve (13) comprenant une troisième unité de soutien (132) comportant une rainure pour guider le mouvement de la troisième unité d'isolation (91) quand la pompe (8) est déplacée par tension dans les unités d'isolation.

2. Lave-vaisselle selon la revendication 1, dans lequel la cuve (13) inclut :
une unité de stockage (133) pour y stocker l'eau de lavage ;
un couvercle (15) situé au-dessus de l'unité de stockage (133) qui sépare le bac (11) de l'unité de stockage (133) ;
un orifice (151) conçu pour traverser le couvercle (15) pour apporter de l'eau de lavage à l'unité de stockage (133) ; et
une unité de raccordement (131) pour raccorder l'unité de stockage (133) au couvercle (15) et soutenir la première unité d'isolation (93) et la deuxième unité d'isolation (95).

3. Lave-vaisselle selon la revendication 2, dans lequel la première unité d'isolation (93) et la deuxième unité d'isolation (95) sont conçues pour fournir une tension pour tirer la pompe (8) dans une direction de l'unité de raccordement (131).

4. Lave-vaisselle selon la revendication 2 ou 3, dans lequel l'unité de raccordement (131) inclut en outre une unité de réception (138) conçue pour fournir un espace pour recevoir une surface supérieure de la pompe (8), et dans lequel les unités d'isolation (91, 93, 95) soutiennent la pompe (8) afin de séparer la surface supérieure de la pompe (8) de la surface de l'unité de réception (138) d'une distance prédéterminée (L).

5. Lave-vaisselle selon la revendication 2, 3 ou 4, dans lequel la cuve (13) inclut en outre les première et deuxième unités (134, 136) fournies sur l'unité de raccordement (131) conçues pour soutenir de façon détachable les première et deuxième unités d'isolation (93, 95), et la pompe (8) inclut en outre des première et deuxième unités de serrage (86, 88) qui dépassent d'une circonférence externe de la pompe.

6. Lave-vaisselle selon la revendication 5, dans lequel la première unité d'isolation (93) inclut un premier corps (931) comprenant un orifice de serrage de la première unité de soutien (933), par lequel la première unité de soutien (134) est insérée de façon détachable, et une première fente (935) par laquelle la première unité de serrage (86) est insérée de façon détachable, et
la deuxième unité d'isolation (95) inclut un deuxième corps (951) comprenant un orifice de serrage de la deuxième unité de soutien (953) par lequel la deuxième unité de soutien (136) est insérée de façon détachable, et une deuxième fente (955) par laquelle la deuxième unité de serrage (88) est insérée de façon détachable.

7. Lave-vaisselle selon la revendication 6, dans lequel la première fente (935) a une dimension longitudinale parallèle à une direction en hauteur de l'enceinte (1) qui est supérieure à la largeur du premier corps (931), et la deuxième fente (955) a une dimension longitudinale parallèle à une direction en hauteur de l'enceinte (1) qui est supérieure à la largeur du deuxième corps (951).

8. Lave-vaisselle selon la revendication 4, dans lequel la troisième unité d'isolation (91) est prévue entre l'unité de réception (138) et la surface supérieure de la pompe (8) pour séparer l'unité de réception (138) de la surface supérieure de la pompe (8) d'une distance prédéterminée et atténuer le transfert des vibrations générées dans la pompe (8) à la cuve (13).

9. Lave-vaisselle selon la revendication 8, dans lequel les unités d'isolation incluent en outre au moins une parmi une quatrième unité d'isolation destinée à guider l'eau de lavage stockée dans l'unité de stockage (133) vers la pompe (8) et à atténuer le transfert des vibrations générées dans la pompe (8) à la cuve (13), et une cinquième unité d'isolation destinée à guider l'eau de lavage évacuée de la pompe vers les bras de pulvérisation (3, 5) et à atténuer le transfert des vibrations générées dans la pompe (8) aux bras de pulvérisation (3, 5).

10. Lave-vaisselle selon la revendication 8 ou 9, dans lequel la troisième unité de soutien (132) est prévue dans l'unité de réception (138) pour soutenir la troisième unité d'isolation (91), et la troisième unité d'isolation (91) inclut un troisième corps (911) en contact avec la surface supérieure de la pompe (8), et une saillie (913) depuis le troisième corps (911) en contact avec la troisième unité d'isolation (91), la saillie (913) ayant une surface en coupe inférieure à celle du troisième corps (911).

11. Lave-vaisselle selon la revendication 10, dans lequel la troisième unité d'isolation (91) inclut en outre plusieurs orifices traversant le troisième corps (911) ou une fente conçue de sorte qu'une surface du troisième corps (911) soit courbée de façon concave.

12. Lave-vaisselle selon la revendication 2 ou 11, dans lequel l'unité de stockage (133) dépasse vers une portion inférieure du couvercle (15) et a une surface en coupe inférieure à celle du couvercle (15), et les unités d'isolation (91, 93, 95) sont conçues pour soutenir la pompe (8) au niveau d'un espace inférieur du couvercle (15) où il n'y a pas d'unité de stockage (133).
